# EUROPÄISCHE PATENTSCHRIFT

(11) **EP 2 379 246 B1**
(45) Veröffentlichungstag und Bekanntmachung des Hinweises auf die Patenterteilung: **20.03.2013**
(21) Anmeldenummer: 09760817.8
(22) Anmeldetag: 19.11.2009
(51) Int. Cl.: B21D 53/10, B60B 27/00, F16C 19/38, F16C 43/04

(54) **ROTATIONSUMFORMVERFAHREN ZUR HERSTELLUNG EINES NIETBUNDES**
ROTARY FORMING METHOD FOR PRODUCING A RIVET FLANGE
PROCÉDÉ DE FAÇONNAGE PAR ROTATION POUR PRODUIRE UN COLLET RIVETÉ

(30) Priorität: 19.12.2008 DE 102008064155
(43) Veröffentlichungstag der Anmeldung: 26.10.2011
(73) Patentinhaber: Schaeffler Technologies AG & Co. KG, 91074 Herzogenaurach (DE)
(72) Erfinder: KAISER, Andreas, 97440 Werneck (DE); LANGER, Roland, 97523 Schwanfeld (DE); LORENZ, Sebastian, 08237 Rothenkirchen (DE)
(86) Internationale Anmeldenummer: PCT/EP2009/065490
(87) Internationale Veröffentlichungsnummer: WO 2010/069700

(56) Entgegenhaltungen:
- EP-A1- 1 974 954
- DE-A1-102006 019 023

## Beschreibung

### Gebiet der Erfindung

Die Erfindung betrifft ein Rotationsumformverfahren zur Herstellung eines Nietbundes eines Wälzlagers, insbesondere Radlager, wobei ein Nietbund aus einem zylindrischen Teil einer Radnabe des Wälzlagers mittels eines entlang einer Richtung einer Rotationsachse der Radnabe orientierten Wälzwerkzeugs geformt wird.

Ein derartiges Verfahren kommt zum Einsatz, wenn dauerhaft eine Vorspannung innerhalb eines Wälzlagers aufrechterhalten werden muss. Eine derartige Vorspannung durchläuft in der Regel die Innen- und Außenringe, die Wälzkörper und die Radnabe, wobei der Nietbund die Wirkkette zwischen den genannten Bauteilen dauerhaft geschlossen halten soll.

Zur Vernietung werden bei Wälzlagern, insbesondere bei Radlagern, zumindest die wesentlichen Bauteile zusammengesetzt und nachfolgend der Nietbund aus einem zylindrischen Teil der Radnabe aus seiner zylindrischen Form in eine hauptsächlich radiale Form gebracht. Typischerweise werden Bauteile wie die Innenringe, der oder die Außenringe, Wälzkörper Dichtungsanordnungen inklusive Schmierung vormontiert.

Die Vernietung nach dem Stand der Technik erfolgt durch das Wälznieten bzw Döppern. Hierzu wird das Wälznietwerkzeug (auch Nietkopfsetzer) auf dem zu verformenden zylindrischen Teil der Radnabe aufgesetzt und in eine taumelnde Bewegung versetzt, wobei durch die unterseitige der Beschaffenheit des Döppers der Nietbund geformt und in die richtige Position gebracht wird.

Es hat sich als problematisch herausgestellt, dass beim Döpperverfahren oft eine ungewollte Aufweitung des Innenringes herbeigeführt wurde. Zudem entstehen bei starken Umformungen am Nietbund große Materialspannungen. Beides kann zum Ausfall oder einer erheblichen Lebensdauerverkürzung des Wälzlagers führen. Dies kann insbesondere dann auftreten, wenn nach dem Döppervorgang der Nietbund zurückfedert.

Des Weiteren impliziert der komplizierte Bewegungsablauf des Döppers eine aufwändig zu betreibende Vorrichtung, die in Verbindung mit der begrenzeten Haltbarkeit des Döppers zu hohen Kosten führt.

Aus DE 10 2006 019023 A1 ist ein Verfahren zur Montage einer Radlagereinheit bekannt, das auf einem Döpper beruht. Dazu wird die Radlagerung auf dem Nabenschaft aufgeschoben und ein Bund am Nabenschaft zur axialen Fixierung des Innenringes geformt.

### Zusammenfassung der Erfindung

Der Erfindung liegt der Aufgabe zu Grunde, ein Rotationsumformverfahren anzugeben, welches die vorgenannten Nachteile zumindest weitgehend unterbindet.

Diese Aufgabe wird durch ein Rotationsumformverfahren der eingangsgenannten Art dadurch gelöst, dass die erste rotierenden Wälzkörper mindestens einer ersten Wälzkörperreihe des Wälzwerkzeugs den Nietbund formen und die Rotationsachsen der ersten Wälzkörper des Wälzwerkzeugs beim Nietvorgang mit der Rotationsachse des Wälzlagers einen ersten Winkel bilden.

Ferner wird die Aufgabe durch ein Wälzlager, insbesondere Radlager, der eingangs genannten Art gelöst, welches mittels des Rotationsumformverfahrens hergestellt worden ist.

Das erfindungsgemäße Rotationsumformverfahren zur Herstellung eines Nietbundes wird aus einem zylindrischen Teil einer Radnabe eines Wälzlagers mittels eines Wälzwerkzeugs der Nietbund gebildet. Dazu wird das Wälzwerkzeug entlang einer Richtung einer Rotationsachse der Radnabe an dem zylindrischen Teil der Radnabe herangeführt und im Verhältnis zu diesem in eine rotative Bewegung versetzt. Das heißt sowohl die Radnabe, als auch das Wälzwerkzeug sind für diesen Vorgang um die Rotationsachse des Wälzlagers rotierbar. Während der Rotation stehen Radnabe und Wälzwerkzeug über Wälzkörper des Wälzwerkzeugs zwecks Kraftübertragung in Kontakt. Die Wälzkörper können hierfür zylindrisch, kegelförmig oder im Längsschnitt konkav oder konvex ausgeführt sein und wälzen während der Rotation auf dem zu formenden Teil der Radnabe in Umfangsrichtung ab. Durch die von den Wälzkörpern übertragene Kraft wird eine Kaltumformung erzielt, die den zylindrischen Teil der Radnabe aufweitet und in radial nach außen drückt. Dabei extendiert der Nietbund über den Innenradius des Innenrings, womit der Innenring dauerhaft axial fixiert wird beziehungsweise das Radlager über die Wälzkörper und den Außenring vorgespannt wird.

Somit wird durch die Wälzwirkung der Wälzkörper eine Vernietung des Wälzlagers herbeigeführt. Diese Art der Kaltumformung wird auch als Rollieren bezeichnet, beziehungsweise das Wälzwerkzeug als Rollierwerkzeug.

Die Außenfläche der Wälzkörper des Wälzwerkzeugs formt den Nietbund des Wälzlagers. Die Wälzkörper können in einer oder mehreren Wälzkörperreihen angeordnet sein. Auf diese Weise werden radial unterschiedliche Bereiche des Nietbundes gleichzeitig bearbeitet. Es ist ein gleichmäßiger Vorgang, der eine definierte Kraftübertragung auf den Gesamtumfang der Radnabe ermöglicht. Durch eine Mehrzahl von Wälzkörperreihen kann zur gleichen Zeit mehr als eine Kraftrichtung zur Formung des Nietbundes erzeugt werden.

Eine erste Wälzkörperreihe bildet mit einer Rotationsachse ihrer Wälzkörper einen ersten Winkel mit der Rotationsachse des Wälzlagers. Entsprechendes kann für eine zweite oder mehrere Wälzkörperreihen gelten.

Vorteilhafterweise kann das Wälzwerkzeug eine gewisse Anzahl von Wälzkörperreihen aufweisen oder es können unterschiedliche Wälzwerkzeuge mit nur einer oder zwei Wälzkörperreihen nacheinander appliziert werden, so dass der Nietbund in die gewünschte Form gebracht wird.

Vorteilhafterweise erlaubt das Wälzwerkzeug mehr Platz im Umformbereich, insbesondere den Zugang zu einem Innenring während des Nietvorgangs. Dadurch kann durch ein Halteelement, beispielsweise ein Niederhalter, bereits vor der vollendeten Vernietung eine Vorspannung aufrechterhalten werden, indem das Halteelement auf den getriebeseitigen Innenring gelegt und vor der Vernietung vorgespannt wird. Diese Option bietet sich beim bekannten Döpperverfahren nicht, weil der Döpper selbst viel Platz einnimmt und zudem auch noch eine Taumelbewegung durchführen muss, die eine vorherige Vorspannung nicht erlaubt. Außerdem wird durch die nachteilige Spaltbildung zwischen Nietbund und Innenring, wie sie vom Döppern bekannt ist, nachhaltig unterbunden.

Die Anwendung dieses Verfahrens führt zu Wälzlagern, beziehungsweise Radlagern, die einen Nietbund aufweisen, der getriebeseitig eine oder mehrere rollierte Flächen aufweist, die mit der Rotationsachse des Wälzlagers zentriert ist/sind und mit dieser einen Winkel einschließt/einschließen.

Eine rollierte Fläche kann gegebenenfalls eine oder zwei ringförmige Kanten mit den benachbarten Flächen, die gegebenenfalls eine rollierte, im Längsschnitt konkave oder konvexe Form aufweisen, bilden. Die Anzahl und die Position der rollierten Flächen kann so gewählt werden, dass die Vorspannung optimal aufrechterhalten wird. Alternativ können die rollierten Flächen auf die Form eines Antriebsteils, wie zum Beispiel einer Gelenkglocke, angepasst werden, so dass eine stabile Verschraubung mit dem Antriebsteil des Antriebsstranges möglich ist.

Weitere vorteilhafte Ausbildungen und bevorzugte Weiterbildungen der Erfindung sind der Figurenbeschreibung und/oder den Unteransprüchen zu entnehmen.

Im Folgenden wird die Erfindung anhand der in den Figuren dargestellten Ausführungsbeispielen näher beschrieben und erläutert.

Es zeigen:
- Fig. 1: eine geschnittene Ansicht eines Radlagers beim Nietvorgang mit einem einreihigen Wälzwerkzeug,
- Fig. 2: eine geschnittene Ansicht eines Radlagers mit einer rollierten Fläche am Nietbund,
- Fig. 3: eine perspektivische Ansicht des Radlagers aus Fig. 2.
- Fig. 4: eine geschnittene Ansicht eines Radlagers mit drei rollierten Flächen am Nietbund,
- Fig. 5: eine perspektivische Ansicht des Radlagers aus Fig. 4, und
- Fig. 6: eine geschnittene Ansicht eines teilweise abgebildeten Radlagers mit drei kegelartigen, rollierten Flächen am Nietbund.

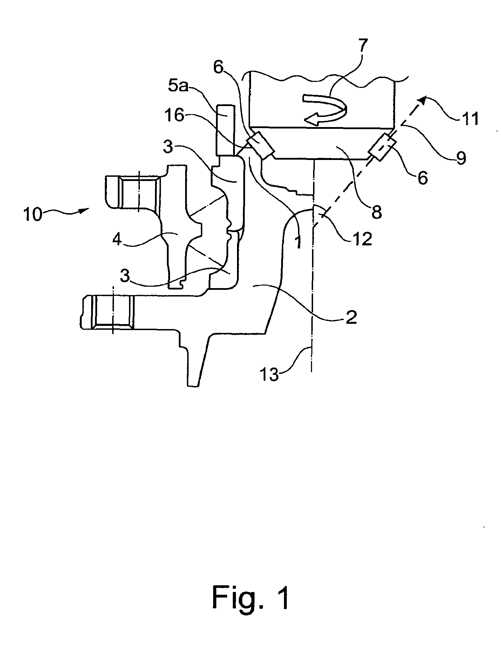

Fig. 1 zeigt eine geschnittene Ansicht eines Radlagers 10 beim Wälznietvorgang mit einem einreihigen Wälzwerkzeug 11, des weiteren auch als Rollierwerkzeug 11 bezeichnet.

Das Radlager 10 ist bereits vormontiert worden, das heißt, dass die Innenringe 3 und der Außenring 4 bereits montiert sind. Ebenso sind die Wälzkörper des Wälzlagers 10 montiert, jedoch in der Fig. 1 nicht abgebildet. Entsprechendes gilt für die Dichtungsanordnungen, die typischerweise als Kassettendichtungen ausgeführt sein können. Auch die Schmierung des Radlagers 10 ist bereits eingebracht worden.

Die Vorspannung wird vorzugsweise während der Vernietung, das heißt, während des Rollierens durch ein Halteelement 5a aufrechterhalten, welches durch einen nicht abgebildeten Mechanismus fixierbar ist. Auf diese Weise kann die Vorspannung des Radlagers 10 bereits vor der Kaltumformung aufrechterhalten werden. Die Vorspannungskraft läuft vom getriebeseitigen Innenring 3 über die nicht abgebildeten Wälzkörper auf den Außenring 4 und von diesem weiter über Wälzkörper der flanschseitigen Wälzkörperreihe auf den flanschseitigen Innenring 3. Dort werden die Kräfte von der Radnabe 2 aufgefangen. Sobald die Kaltumformung stattgefunden hat und der Nietbund 1 völlig ausgeformt ist, wird das Halteelement 5a gelöst und die Vorspannungskraft über den Nietbund 1 gesichert.

Vorteilhafterweise kann beim Rollieren der getriebeseitige Innenring 3 nicht zurückfedern. Beim Döppern stellt sich das Problem, dass beim Umformungsvorgang auch kontinuierlich eine Vorspannung aufgebaut werden muss. Dies findet in einem andauernden Wechselspiel eines Verformungsvorgangs mit einem Rückfedervorgang statt. Beim Rollieren hingegen kann die Verformung und die einstweilige Vorspannung mittels des Halteelementes 5a vorteilhaft getrennt werden. Dadurch ist es möglich eine Vorspannung wesentlich präziser aufzubauen und bessere Fertigungstoleranzen zu erzielen.

Vorteilhafterweise ist der Prozess des Rollierens gleichförmiger als das Döppern, womit der Nietvorgang einfacher und kontrollierbarer wird. Durch die genauer regelbare Kraft des Halteelements (Niederhalter) auf den Innenring lässt sich die Rückfederung und somit die Vorspannung genau einstellen.

Vorteilhafterweise kann beim Einsatz eines Rollierwerkzeugs 11 eine geringere Verformungskraft eingesetzt werden als beim Döppern, womit die Standzeiten des Rollierwerkzeugs 11 ohne weiteres verlängert werden können und auch ein geringerer Energieverbrauch für das Verfahren erwartet werden kann.

Beim Rollieren dreht sich das Rollierwerkzeug 11 in die Drehrichtung 7, womit, gegebenenfalls über eine Federung, Verformungskraft über die Wälzkörper der Wälzkörperreihe 6 auf den Nietbund 1 übertragen werden. Die Verformungskraft entsteht dadurch, dass das Rollierwerkzeug 11 entlang der Rotationsachse 13 der Radnabe 2 teilweise in den verformbaren Teil der Radnabe 2 hineingetrieben wird.

Die Wälzkörper der Wälzkörperreihe 6 sind in diesem Ausfühungsbeispiel zylindrisch geformt, wodurch auf dem Nietbund 1 eine rollierte Fläche 16 entsteht. Die Fläche 16 liegt auf einem gedachten Konus, der in der Rotationsachse 13 zentriert ist und einen Öffnungswinkel aufweist, der dem zweifachen Winkel 12 entspricht, wobei der Winkel 12 zwischen der Rotationsachse 13 und einer Rotationsachse 9 der Wälzkörper der Wälzkörperreihe 6 anliegt.

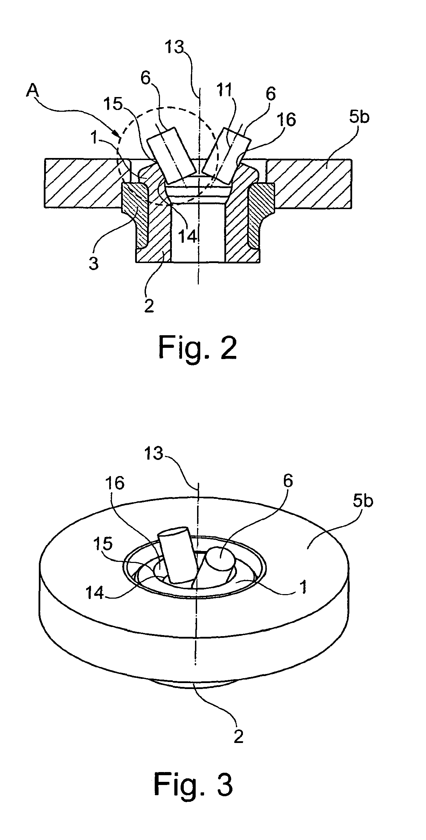

Fig. 2 und 3 zeigen jeweils eine geschnittene und eine perspektivische Ansicht eines Radlagers mit einer rollierten Fläche 16 am Nietbund 1.

Vorteilhafterweise bildet die rollierte Fläche 16 mit den angrenzenden Flächen des Nietbundes 1, beziehungsweise der Radnabe 2, die Kanten 15 und 14, womit der Nietbund 1 optimal an ein Antriebsteil, zum Beispiel eine Gelenkglocke, anpassbar ist.

Vorteilhafterweise kann die Kraftrichtung der Wälzkörper des Rollierwerkzeugs 11 derart gewählt werden, dass eine Härtung des Nietbundes 1 nach der Vernietung nicht notwendig ist und dieser in ungehärtetem Zustand die notwendige Vorspannung aufbringen kann.

Zur Veranschaulichung sind die Wälzkörper 6 des Rollierwerkzeugs in der Position abgebildet, die sie gegenüber dem Wälznietbund 1 während des Nietvorgangs inne haben. Die zugehörige Wälzkörperreihe rotiert bei Rollieren um die gleiche Achse, wie das Radlager während des Betriebes desselben.

Während des Rollierens wird die axiale Ausdehung des Nietbundes 1 zu Gunsten einer größeren radialen Ausdehnung reduziert. Vorteilhafterweise wird dabei ein ringförmiger Niederhalter 5b verwendet, der gesamtumfänglich auf der Stirnseite des Innenrings 3 aufliegt. Damit wird eine gleichmäßige Vorspannung während des Nietvorgangs aufrechterhalten.

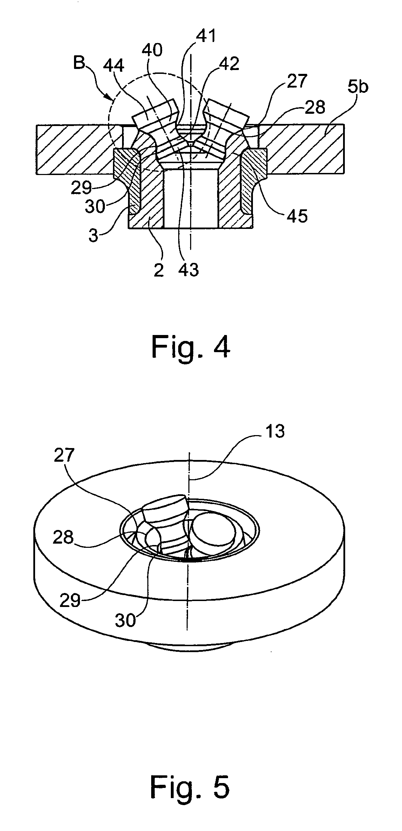

Fig. 4 und 5 zeigen jeweils eine geschnittene und eine perspektivische Ansicht eines Radlagers mit drei rollierten Flächen am Nietbund 45. Diese Flächen werden von den Kanten 27,28,29,30 begrenzt.

Die verwendeten Wälzkörper des Rollierwerkzeugs sind ebenfalls abgebildet und weisen drei unterschiedlich geformte, nichtzylindrische Bereiche 41,42,43 auf, die zur Kaltumformung werwendbar sind. Die erste Fläche zwischen den kanten 27 und 28 wurde von dem konischen (kegelartigen) Bereich des Wälzkörpers geformt und weist demnach auch diese Form auf. Die zweite Fläche zwischen den Kanten 28 und 29 des Nietbundes 45 ist konvex, weil sie durch einen konkaven Bereich 41 der Wälzkörper geformt wurde. Die dritte, ringförmige Fläche zwischen den Kanten 29 und 30 ist wieder kegelartig, wie auch die erste Fläche.

Die entstandenen rollierten Flächen schließen jeweils Winkel mit der Rotationsachse 13 ein. Auch bei konkaven bzw konvexen rollierten Flächen kann ein Winkel zur Rotationsachse angegeben werden. Hierfür kann eine Gerade gebildet werden, die durch die beiden Punkte der angrenzenden, ringförmigen Kanten in der Längsebene zur Rotationsachse verläuft. Der Winkel der von dieser Gerade und der Rotationsachse 13 gebildet wird ist auch der Winkel, den die rollierte Fläche zwischen den Kanten mit der Rotationsachse 13 einschließt. Damit läßt sich auf einfache Weise die Orientierung der rollierten Fläche von der Ausgestaltung ihrer Form trennen.

Durch die spezielle Form der Wälzkörper läßt sich die gewünschte Form des Nietbundes 45 mit einem einzigen Rolliervorgang erreichen. Grundsätzlich ist die Form des Nietbundes 45 auch durch drei nachfolgende Rolliervorgänge herstellbar, d.h. zwei mit zylindrischen oder kegelartigen Wälzkörpern und ein dritter Vorgang mit konkaven Wälzkörpern.

Die Verwendung des Niederhalters 5b ist entspricht der des Niederhalters 5a aus Figs. 2 und 3.

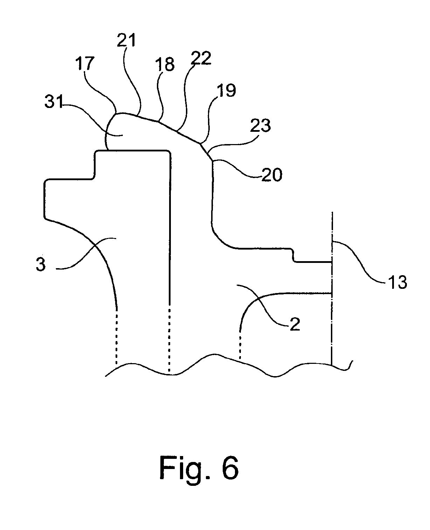

Fig. 6 zeigt eine geschnittene Ansicht eines teilweise abgebildeten Radlagers mit drei rollierten Flächen 21, 22, 23 am Nietbund 31.

Vorteilhafterweise ist nun der Nietbund im allgemeinen durch eine Anwendung verschiedener Rollierwerkzeuge, beziehungsweise der Anwendung verschiedener Wälzkörperreihen, die sowohl in der Form ihrer Wälzkörper, ihrer Orientierung oder ihrem Radialabstand von der Rotationsachse 13 differieren. Damit kann der Nietbund 31 in eine Form gebracht werden, die optimal an ein Antriebsteil anpassbar ist. Bisher hatte man den Raumverlust durch eine kaum veränderliche Form des Nietbundes in Kauf genommen. Mithilfe des erfindungsgemäßen Verfahrens kann der Nietbund 31 sowohl die Vorspannung aufrechterhalten, aber auch an die umliegenden Bauteile optimal und kostengünstig angepasst werden.

Beim Nietbund 31 werden durch die rollierten Flächen 21, 22, 23 vier ringförmige Kanten 17,18, 19, 20 gebildet. Die Schaffung der rollierten, konischen Flächen 21, 22, 23 erlaubt nicht nur eine optimale Einpassung des Radlagers, sondern stellt auch genau definierte Auflageflächen zur Verfügung, die flach auf den Flächen des Antriebsteils, wie zum Beispiel einer Gelenkglocke, aufliegen können, um eine optimale axiale Kraftübertragung für das Verschrauben des Wälzlagers mit der Gelenkglocke zu ermöglichen.

Zusammenfassend betrifft die Erfindung ein Rotationsumformverfahren zur Herstellung eines Nietbundes eines Wälzlagers, insbesondere Radlager, wobei ein Nietbund aus einem zylindrischen Teil einer Radnabe mittels eines entlang einer Richtung der Rotationsachse der Radnabe orientierten Wälzwerkzeugs geformt wird. Ziel ist es den Umformvorgang vorteilhafter zu gestalten, Materialspannungen niedrig zu halten und die Lagervorspannung genauer einzustellen. Dazu formen erste rotierende Wälzkörper mindestens einer ersten Wälzkörperreihe des Wälzwerkzeugs den Nietbund, wobei Rotationsachsen der ersten Wälzkörper des Wälzwerkzeugs beim Nietvorgang mit der Rotationsachse des Wälzlagers einen ersten Winkel bilden. Dadurch ist es möglich mit einer geringeren Verformungskraft gleichmäßiger auf den gesamten Umfang des zylindrischen Teils der Radnabe einzuwirken und zudem mittels eines Halteelementes bereits vor der Kaltumformung eine einstweilige Vorspannung des Wälzlagers zu ermöglichen.

### Bezugszeichenliste

- A: Ausschnitt aus Fig. 2
- B: Ausschnitt aus Fig. 4
- 1: Nietbund
- 2: Radnabe
- 3: Innenring bzw. Innenringe
- 4: Außenring
- 5a,b: Halteelement
- 6: Wälzkörper
- 7: Drehrichtung
- 8: Wälzkörperaufnahme
- 9: Rotationsachse der Wälzkörper
- 10: Radlager
- 11: Wälzwerkzeug
- 12: erster Winkel
- 13: Rotationsachse des Radlagers
- 14,15: Kante
- 16: rollierte Fläche
- 17,18,19,20: Kante
- 21,22,23: rollierte Fläche
- 27,28,29,30: Kante
- 31: Nietbund
- 40, 42: konischer Bereich
- 41: konkaver Bereich
- 43,44: zylindrischer Bereich
- 45: Nietbund

## Patentansprüche

1. Rotationsumformverfahren zur Herstellung eines Nietbundes (1,31,45) eines Wälzlagers (10), insbesondere Radlager (10), wobei ein Nietbund (1,31,45) aus einem zylindrischen Teil einer Radnabe (2) des Wälzlagers (10) mittels eines entlang einer Richtung einer Rotationsachse (13) der Radnabe (2) orientierten Wälzwerkzeugs (11) geformt wird, **dadurch gekennzeichnet, dass** erste rotierende Wälzkörper (6) mindestens einer ersten Wälzkörperreihe des Wälzwerkzeugs (11) den Nietbund (1,31, 45) formen und wobei Rotationsachsen (9) der ersten Wälzkörper (6) des Wälzwerkzeugs (11) beim Nietvorgang mit der Rotationsachse (13) des Wälzlagers (10) einen ersten Winkel (12) bilden.

2. Verfahren nach Anspruch 1, wobei zweite rotierende Wälzkörper einer zweiten Wälzkörperreihe des Wälzwerkzeugs den Nietbund (31) formen und Rotationsachsen der zweiten Wälzkörper des Wälzwerkzeugs beim Nietvorgang mit der Rotationsachse des Wälzlagers einen zweiten Winkel bilden.

3. Verfahren nach einem der vorhergehenden Ansprüche, wobei zylinderförmige oder kegelförmige Wälzkörper der ersten (6), zweiten und/oder anderen Wälzkörperreihen den Nietbund (31) gleichzeitig mit dem Wälzwerkzeug (11) formen.

4. Verfahren nach einem der vorhergehenden Ansprüche, wobei mit unterschiedlichen Wälzwerkzeugen (11) nacheinander gewälzt wird und sich die Wälzwerkzeuge (11) in der Form ihrer Wälzkörper oder deren Orientierung zur Rotationsachse (13) des Wälzlagers derart unterscheiden, dass nacheinander Verformungskräfte unterschiedlicher Richtungen auf den zylindrischen Teil der Radnabe (2) wirken.

5. Verfahren nach einem der vorhergehenden Ansprüche, wobei während des Nietvorgangs das Wälzlager (10) durch ein Halteelement (5) vorgespannt ist.

6. Verfahren nach einem der vorhergehenden Ansprüche, wobei sich beim Nietvorgang das Wälzwerkzeug (11) und/oder die Radnabe (2) um die Rotationsachse (13) des Wälzlagers (10) drehen.

## Claims

1. Rotary forming method for producing a rivet flange (1, 31, 45) of an antifriction bearing (10), in particular a wheel bearing (10), a rivet flange (1, 31, 45) being formed from a cylindrical part of a wheel hub (2) of the antifriction bearing (10) by means of a rolling tool (11) which is oriented along a direction of a rotational axis (13) of the wheel hub (2), **characterized in that** first rotating rolling bodies (6) of at least one first rolling body row of the rolling tool (11) form the rivet flange (1, 31, 45), and rotational axes (9) of the first rolling bodies (6) of the rolling tool (11) forming a first angle (12) with the rotational axis (13) of the antifriction bearing (10) during the riveting operation.

2. Method according to Claim 1, second rotating rolling bodies of a second rolling body row of the rolling tool forming the rivet flange (31), and rotational axes of the second rolling bodies of the rolling tool forming a second angle with the rotational axis of the antifriction bearing during the riveting operation.

3. Method according to one of the preceding claims, cylindrical or conical rolling bodies of the first (6), second and/or other rolling body rows forming the rivet flange (31) at the same time with the rolling tool (11).

4. Method according to one of the preceding claims, rolling being carried out with different rolling tools (11) one after another, and the rolling tools (11) differing in terms of the shape of their rolling bodies or their orientation with respect to the rotational axis (13) of the antifriction bearing in such a way that deformation forces in different directions act one after another on the cylindrical part of the wheel hub (2).

5. Method according to one of the preceding claims, the antifriction bearing (10) being prestressed by a holding element (5) during the riveting operation.

6. Method according to one of the preceding claims, the rolling tool (11) and/or the wheel hub (2) rotating about the rotational axis (13) of the antifriction bearing (10) during the riveting operation.

## Revendications

1. Procédé de façonnage par rotation pour produire un collet riveté (1, 31, 45) d'un palier à roulement (10), en particulier d'un palier de roue (10), un collet riveté (1, 31, 45) étant formé à partir d'une partie cylindrique d'un moyeu de roue (2) du palier à roulement (10) au moyen d'un outil de roulement (11) orienté le long d'une direction d'un axe de rotation (13) du moyeu de roue (2), **caractérisé en ce que** des premiers corps de roulement rotatifs (6) d'au moins une première rangée de corps de roulement de l'outil de roulement (11) forment le collet riveté (1, 31, 45) et des axes de rotation (9) des premiers corps de roulement (6) de l'outil de roulement (11) formant avec l'axe de rotation (13) du palier à roulement (10) un premier angle (12) lors de l'opération de rivetage.

2. Procédé selon la revendication 1, dans lequel des deuxièmes corps de roulement rotatifs d'une deuxième rangée de corps de roulement de l'outil de roulement forment le collet riveté (31) et des axes de rotation des deuxièmes corps de roulement de l'outil de roulement forment avec l'axe de rotation du palier à roulement un deuxième angle lors de l'opération de rivetage.

3. Procédé selon l'une quelconque des revendications précédentes, dans lequel des corps de roulement cylindriques ou coniques de la première rangée de corps de roulement (6), de la deuxième rangée de corps de roulement et/ou d'autres rangées de corps de roulement forment le collet riveté (31) simultanément avec l'outil de roulement (11).

4. Procédé selon l'une quelconque des revendications précédentes, dans lequel des outils de roulement différents (11) roulent tour à tour et les outils de roulement (11) se distinguent par la forme de leurs corps de roulement ou par leur orientation par rapport à l'axe de rotation (13) du palier à roulement, de telle sorte que des forces de déformation de directions différentes agissent tour à tour sur la partie cylindrique du moyeu de roue (2).

5. Procédé selon l'une quelconque des revendications précédentes, dans lequel, pendant l'opération de rivetage, le palier à roulement (10) est précontraint par un élément de retenue (5).

6. Procédé selon l'une quelconque des revendications précédentes, dans lequel, pendant l'opération de rivetage, l'outil de roulement (11) et/ou le moyeu de roue (2) tourne (nt) autour de l'axe de rotation (13) du palier à roulement (10).
